# NEUE EUROPÄISCHE PATENTSCHRIFT

(11) **EP 1 038 080 B2**
(45) Veröffentlichungstag und Bekanntmachung des Hinweises auf die Entscheidung über den Einspruch: **26.03.2008**
(45) Hinweis auf die Patenterteilung: 21.04.2004
(21) Anmeldenummer: 98965587.3
(22) Anmeldetag: 20.11.1998
(51) Int. Cl.: E05B 49/00, G07C 9/00, B60R 25/00

(54) **SYSTEM ZUR KONTROLLE DER ZUGANGSBERECHTIGUNG**
SYSTEM FOR CONTROLLING ACCESS AUTHORIZATION
SYSTEME DE CONTROLE D'AUTORISATION D'ACCES

(30) Priorität: 11.12.1997 DE 19755092
(43) Veröffentlichungstag der Anmeldung: 27.09.2000
(73) Patentinhaber: ROBERT BOSCH GMBH, 70442 Stuttgart (DE)
(72) Erfinder: SCHMITZ, Stephan, D-70197 Stuttgart (DE); MATHONY, Hans-Joerg, D-71732 Tamm (DE)
(86) Internationale Anmeldenummer: PCT/DE1998/003431
(87) Internationale Veröffentlichungsnummer: WO 1999/029986

(56) Entgegenhaltungen:
- EP-A- 0 605 996
- EP-A- 0 811 739
- DE-A- 19 501 004

## Beschreibung

### Stand der Technik

Die Erfindung geht aus von einem System zur Kontrolle der Zugangsberechtigung nach der Gattung des unabhängigen Anspruchs. Aus der DE 44 28 947 C1 ist bereits eine Schließvorrichtung für ein Kraftfahrzeug mit einer Betätigungseinrichtung sowie mit einem Transponder bekannt. Bei Betätigung eines Senders ist ein Fernbetätigungswechselcodewort erzeugbar, das eine Decodiereinrichtung empfängt, mit einem in der Decodiereinrichtung gespeicherten Fernbetätigungswechselcodesignal vergleicht und in Abhängigkeit von dem Vergleich ein Entriegelungssignal erzeugt. Zur Erhöhung der Sicherheit ist darüberhinaus ein Transponder vorgesehen, dessen Wechselcodesignal zusätzlich für eine Freigabe ausgewertet wird.

Aus DE 195 01 004 A1 ist ein Verfahren zum Betrieb eines Datenübertragungssystems aus einem Transponder und einem Lesegerät bekannt. Zur verifizierbaren Datenübertragung zwischen einem Lesegerät und einem Transponder sendet das Lesegerät nach seiner Aktivierung eine Lesegerät-Nachricht aus. Der Transponder empfängt nach seiner Aktivierung die Lesegerät-Nachricht und überträgt eine erste Transponder-Nachricht an das Lesegerät. Der Verifizierungsvorgang wird mittels eines im Transponder gespeicherten Transponder-Festcodes und eines im Lesegerät gespeicherten Lesegerät-Festcodes durchgeführt. Nach erfolgreicher Authentifizierung zwischen Transponder und Lesegerät können die mit dem Lesegerät über Kommunikationsleitungen verbundenen Steuergeräte freigeschaltet werden.

Der Erfindung liegt die Aufgabe zugrunde, das System der DE 44 28 947 C1 zu vereinfachen, ohne einen Sicherheitsverlust zu erleiden. Die Aufgabe ist durch die kennzeichnenden Merkmale des unabhängigen Anspruchs gelöst.

Das erfindungsgemäße System zur Kontrolle der Zugangsberechtigung umfaßt ein Basisgerät, das ein Codewort empfängt. Das Codewort enthält eine Antwort (Response), die ein Rechner mit einer Sollantwort (Sollresponse) vergleicht. Eine Zugangsberechtigung erfolgt bei Übereinstimmen von Response und Sollresponse. Zumindest eine Fernbedienung sendet das Codewort. Das erfindungsgemäße System zeichnet sich dadurch aus, daß in der Fernbedienung ein im Rahmen eines bereits in der Vergangenheit erfolgreich durchgeführten Anreiz-Antwort-(Challenge-Response)-Verfahrens vom Basisgerät gesendetes Anreizsignal (Challenge) gespeichert ist zur Generierung des Codeworts. Die Challenge gibt somit einen Hinweis auf eine Berechtigung der Fernbedienung. Dadurch werden Manigulationsmöglichkeiten eingeschränkt. Andererseits ist für den Start einer Zugangsberechtigungsprozedur ein erneutes bidirektionates Challenge-Response-Verfahren nicht mehr notwendig, da die Challenge bereits in dem Speicher der Fernbedienung hinterlegt ist. Auf diese Weise läßt sich das Codewort bereits mit einer größeren Reichweite an das Basisgerät senden, während die Challenge-Response-Prozedur nur im Nahbereich durchgeführt werden kann. Damit ist eine Entkopplung zwischen bidirektionaler Datenübertragung und unidirektionaler Datenübertragung gewährleistet. In der Fernbedienung ist lediglich ein Sender größerer Reichweite vorzusehen, nicht jedoch ein entsprechender Empfänger für den Fernbereich. Die Challenge kann zur Synchronisation zwischen Basisgerät und Fernbedienung verwendet werden. Zudem sind weder im Basisgerät noch in der Fernbedienung die für die Zugangsberechtigung unmittelbar maßgebliche Response bzw. Sollresponse abgespeichert, so daß der direkte Zugriff auf diese sicherheitsrelevanten Informationen nicht möglich ist.

In einer zweckmäßigen Weiterbildung ist die Sollresponse in Abhängigkeit von einer in der Fernbedienung hinterlegten und im Codewort enthaltenen Kennung gebildet. Dadurch wird eine eindeutige Zuordnung zwischen der verwendeten Fernbedienung und der zugehörigen, im Basisgerät abgelegten Verschlüsselung erreicht. Die eindeutige Zuordnung gewährleistet eine hinreichend hohe Sicherheit gegen unberechtigte Manipulationsversuche. Dadurch kann der Algorithmus, der in der Fernbedienung die gespeicherte Challenge - beispielsweise unter Verwendung einer fernbedienungsspezifischen Kennung - zu einer Response verschlüsselt, einfach ausfallen und in einem Mikrocontroller integriert sein.

In einer Ausgestaltung wird die im Basisgerät hinterlegte Challenge nach einer vorgegebenen Zahl fehlender Übereinstimmungen von Response und Sollresponse gelöscht. Damit ist bei einer Anzahl mißlungender Öffnungsversuche gewährleistet, daß eine Zugangsberechtigung bei weiterem Probieren nicht mehr erfolgt. Ein erneuter Öffnungsversuch ist nur in Verbindung mit einem erfolgreich durchlaufenden Challenge-Response-Verfahren zuzulassen. Bei Scheitern der Zugangsberechtigung über das unidirektionale Protokoll werden die Sicherheitsanforderungen erhöht, indem ein Zugang nur in Verbindung mit dem komplexen bidirektionalen Protokoll erreicht werden kann.

Eine vorteilhafte Ausgestaltung sieht vor, daß im Codewort ein Zählercode enthalten ist, der von dem Basisgerät mit einem Referenzcode verglichen wird. Nur bei einer Abweichung erfolgt eine Zugangsberechtigung. Der Zählercode wird mit der Betätigung eines Bedienelements der Fernbedienung verändert. Ein Senden des eben abgehörten Codeworts löst keine Zugangsberechtigung aus. Im Codewort kann der Zählerstand sowohl unverschlüsselt als auch verschlüsselt vorhanden sein.

Als Referenzcode ist ein gesendeter Code verwendet. Eine separate Zählerfunktion im Basisgerät ist hierfür nicht vorzusehen.

Zweckmäßig erfolgt die Übertragung des Codeworts hochfrequent und die Übertragung der Challenge niederfrequent. Aufgrund der gespeicherten Challenge benötigt die Fernbedienung keinen Empfänger im Hochfrequenzbereich.

Weitere zweckmäßige Weiterbildungen ergeben sich aus weiteren abhängigen Ansprüchen und aus der Beschreibung.

### Zeichnung

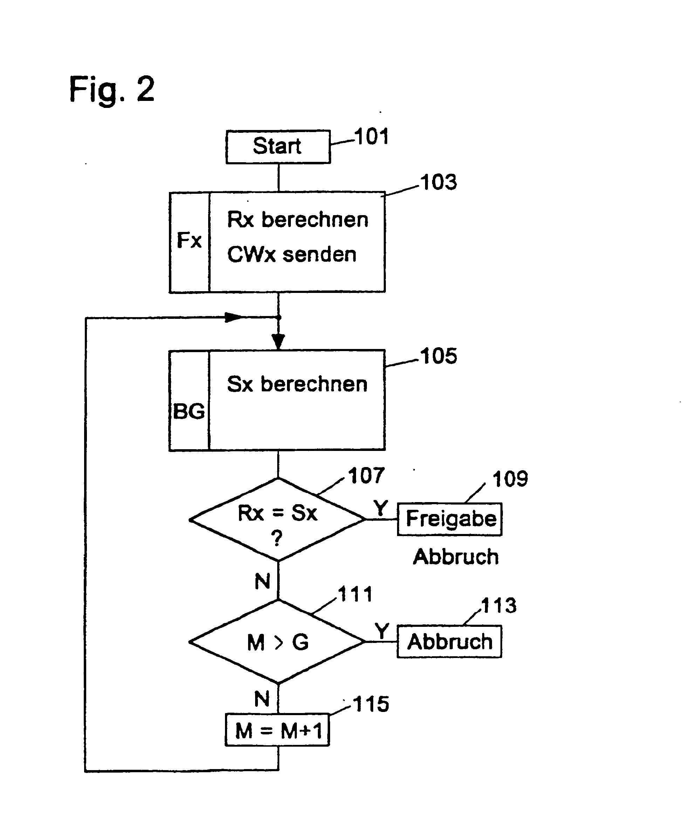

Zwei mögliche Ausführungsbeispiele eines erfindungsgemäßen Systems zur Kontrolle der Zugangsberechtigung sind in der Zeichnung dargestellt und in der nachfolgenden Beschreibung näher erläutert. Es zeigen die Figuren 1 und 2 ein Blockschaltbild und eine Zugangsberechtigungsprozedur eines ersten Ausführungsbeispiels, die Figuren 3 und 4 ein Blockschaltbild und eine Zugangsberechtigungsprozedur eines zweiten Ausführungsbeispiels.

### Beschreibung

Mehrere Fernbedienungen F1, ... Fx, ... Fn kommunizieren mit einem Basisgerät BG, das einen Sender/Empfänger 12 und einen Rechner 16 umfaßt. Der Rechner 16 tauscht Daten aus mit dem Sender/Empfänger 12 und hat Zugriff auf im Speicher hinterlegten Challenges C1, ... Cx, ... Cn, Kennungen K1, ..., Kx, ... Kn und einen Grenzwert G. Exemplarisch ist der Aufbau der x-ten Fernbedienung Fx gezeigt. Ein Fernbedienungsrechner 20 hat Zugriff auf die im Speicher hinterlegte Kennung Kx und Challenge Cx. Er gibt Daten an den Sender 22 ab und tauscht Daten aus mit einem Fernbedienungs-Sender/Empfänger 26. Der von einem Bedienelement 24 beeinflußte Signalzustand ist dem Fernbedienungsrechner 20 zugeführt.

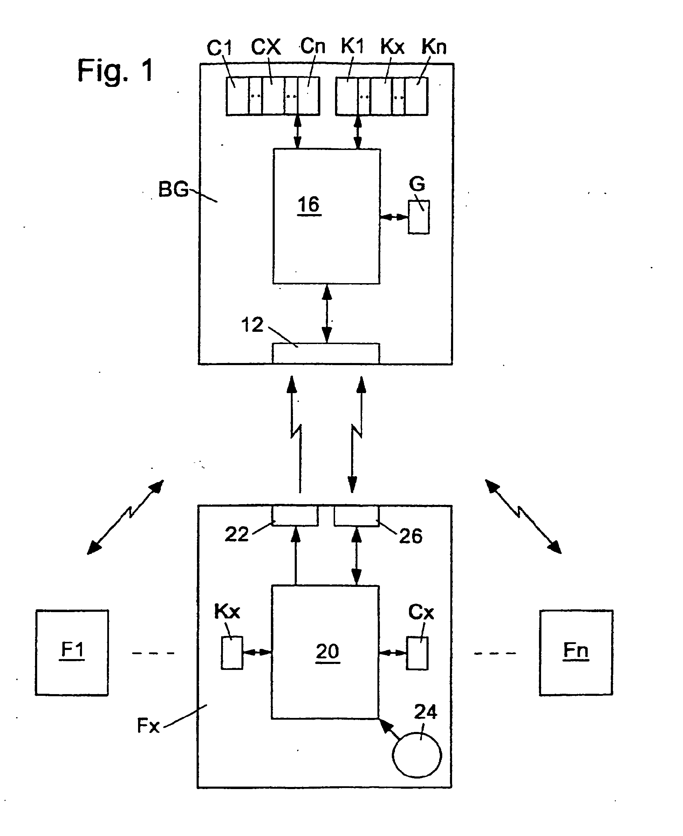

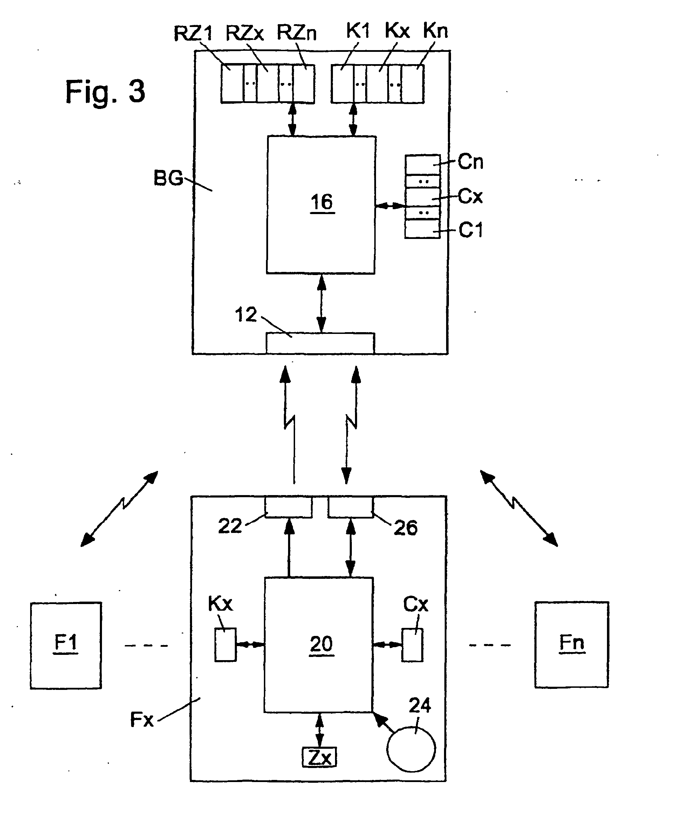

Das zweite Ausführungsbeispiel gemäß Figur 3 unterscheidet sich von dem ersten Ausführungsbeispiel gemäß Figur 1 dadurch, daß in dem Basisgerät BG anstelle des Grenzwerts G ein Speicher für einen Referenzcode RZ1, ... RZx, ... RZn vorgesehen ist. Die Fernbedienung Fx weist ein zusätzliches Feld für einen Zählercode Zx auf.

Im folgenden wird die Funktionsweise des in Figur 1 dargestellten ersten Ausführungsbeispiels näher erläutert. In dem Basisgerät BG ist für jede Fernbedienung F1, ... Fx, ... Fn eine entsprechende Kennung K1, ... Kx, ... Kn hinterlegt. Dadurch kann das Basisgerät BG jede einzelne Fernbedienung Fx bzw. jede Fernbedienungsgruppe Fx - wenn beispielsweise einer Kennung Kx mehrere Fernbedienungen Fx zugeordnet sind - eindeutig identifizieren. Diese Kennungen K1, ... Kx, ... Kn können die entsprechenden Speicherplätze sein beziehungsweise anhand des Speicherplatzes erkannt werden. Im Challenge-Response-Verfahren sendet das Basisgerät die Challenge Cx an die durch die Kennung Kx eindeutig zugeordnete Fernbedienung Fx. Ein Zufallsgenerator erzeugt diese Challenge Cx. Der Rechner 16 speichert die gesendete Challenge Cx in einem über die Kennung Kx addressierten Speicherplatz. Der Fernbedienungsrechner 20 legt die vom Basisgerät BG zuletzt gesendete Challenge Cx in einem Speicher ab.

Der Benutzer startet die unidirektionale Kommunikation der Fernbedienung Fx mit dem Basisgerät BG, indem er das Bedienelement 24 betätigt, Schritt 101. Der Fernbedienungsrechner 20 verknüpft die im Speicher hinterlegte Challenge Cx unter Verwendung einer für die spezielle Fernbedienung Fx fernbedienungsspezifischen Information mit einem Algorithmus, woraus die Response Rx entsteht. Als fernbedienungsspezifische Information ist beispielsweise ein Teil der Kennung Kx, ein in der Fernbedienung Fx fest hinterlegter Herstellercode verwendet Wesentlich ist jedoch, daß diese Verschlüsselung, das heißt Algorithmus und fernbedienungsspezifische Informationen, der Challenge Cx für jede Fernbedienung Fx auch im Basisgerät BG bekannt und hinterlegt ist. In dem Codewort CWx sind die Kennung Kx und die Response Rx, gegebenenfalls entsprechende Aufweck- und Aktionsbefehle, enthalten. Der Sender 22 sendet das Codewort CWx an das Basisgerät BG, Schritt 103. Der Rechner 16 filtert aus dem empfangenen Codewort CWx die Kennung Kx. Der Rechner 16 wählt die mit dieser Kennung Kx addressierte Challenge Cx und Verschlüsselung aus, mit denen auch in der Fernbedienung Fx die Response Rx ermittelt wurde. Der Rechner 16 berechnet aus der im Basisgerät BG hinterlegten Challenge Cx, dem Algorithmus und der fernbedienungsspezifischen Information, also der Verschlüsselung, die Sollresponse Sx, Schritt 105. Im Basisgerät BG werden empfangene Response Rx und berechnete Sollresponse Sx verglichen, Schritt 107. Bei Übereinstimmung gibt der Rechner 16 ein entsprechendes Freigabesignal, Schritt 109. Andernfalls folgt die Abfrage 111, ob die Anzahl der mißlungenen Öffnungsversuche M bereits einen vorgebbaren Grenzwert G überschritten hat. Ist dies der Fall, wird kein weiterer Öffnungsversuch zugelassen, Schritt 113. Zudem wird die im Basisgerät BG gespeicherte Challenge Cx gelöscht. Eine Zugangsberechtigung kann somit nur durch einen erfolgreichen Durchlauf der bidirektionalen Challenge-Response-Prozedur, nicht jedoch mit dem beschriebenen unidirektionalen Protokoll erreicht werden. Hat die Anzahl der mißlungenen Öffnungsversuche M den Grenzwert G noch nicht überschritten, wird die Anzahl M inkrementiert, Schritt 115. Hieran schließt sich Schritt 105 an, das weitere Vorgehen läuft ab wie bereits beschrieben.

Die Schritte ab 111 erhöhen die Sicherheit der unidirektionalen Datenübertragung, sind jedoch nicht unbedingt erforderlich.

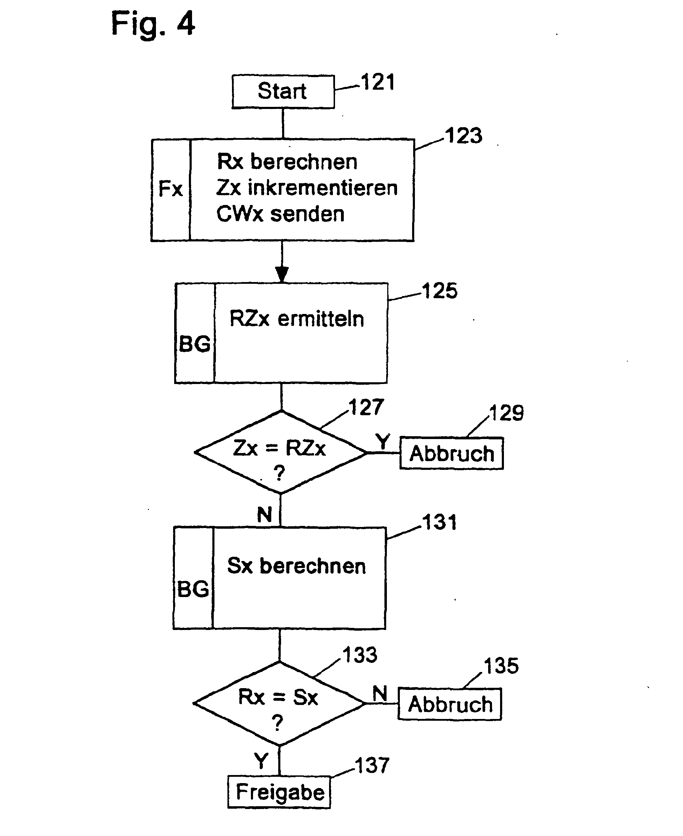

Das im folgenden beschriebene zweite Ausführungsbeispiel bezieht sich auf die Figuren 3 und 4. Wie bereits für das erste Ausführungsbeispiel ausgeführt, ist in der Fernbedienung Fx die Challenge Cx gespeichert. In der Fernbedienung Fx ist ein Zählercode Zx gespeichert, der bei Betätigung des Bedienelements 24 inkrementiert wird. Für jede Fernbedienung Fx ist in dem Basisgerät BG der zuletzt gesendete Zählercode Zx als Referenzcode RZ1, ... RZx, ... RZn hinterlegt. Nach Auslösen des Startvorgangs durch Betätigen des Bedienelements 24, Schritt 121, wird in Übereinstimmung mit dem ersten Ausführungsbeispiel die Response Rx berechnet. Der Zählercode Zx wird um Eins erhöht. In dem Codewort CWx ist neben der Response Rx und der Kennung Kx der Zählercode Zx verschlüsselt enthalten. Der Sender 22 sendet das Codewort CWx an den Sender/Empfänger 12, Schritt 123. Wiederum filtert der Rechner 16 aus dem empfangenen Codewort CWx die Kennung Kx, anhand derer er den der Fernbedienung Fx zugehörigen Referenzcode RZx ausliest, Schritt 125. Nachfolgend wird der Zählercode Zx mit dem Referenzcode RZx verglichen, Schritt 127. Da in dem Basisgerät BG der zuletzt gesendete Zählercode Zx als Referenzcode RZx gespeichert ist, weichen bei einer ordnungsgemäßen Betätigung der Fernbedienung Fx Zählercode Zx und Referenzcode RZx voneinander ab. Stimmen sie jedoch überein, wird abgebrochen, Schritt 129. Eine Zugangsberechtigung erfolgt nicht. Andernfalls ermittelt das Basisgerät BG wie bereits für das erste Ausführungsbeispiel, die Sollresponse Sx, Schritt 131. Stimmen Response Rx und Sollresponse Sx nicht überein, Schritt 133, so wird abgebrochen, Schritt 135. Andernfalls wird die Berechtigung zur Einleitung eines Öffnungsvorgangs gegeben, Schritt 137.

Als alternatives zweites Ausführungsbeispiel wird der Zählercode Zx in der Fernbedienung Fx verschlüsselt. Zur Ermittlung des Referenzcodes RZx ist diese Verschlüsselung adressiert im Basisgerät BG abzulegen. Für den Zählercode Zx ist nur von Bedeutung, daß er sich mit jeder Betätigung der Fernbedienung Fx verändert, ob durch eine Zählerfunktion oder einen sonstigen Algorithmus, ist nicht wesentlich.

Die beiden Ausführungsbeispiele lassen sich auch dahingehend kombinieren, daß beispielsweise im Ablauf gemäß Figur 4 die Abfrage nach Schritt 111 durchgeführt wird. Dadurch läßt sich die Sicherheit gegenüber unberechtigten Öffnungsversuchen weiter erhöhen.

Die nicht näher ausgeführte Challenge-Response-Prozedur erfolgt vorzugsweise im Nahbereich des zu betretenden Raumes, beispielsweise eines Kraftfahrzeugs, mit einer geringeren Frequenz als die eine größere Reichweite zulassende Übertragung des Signals durch den Sender 22. Ein entsprechender Empfänger ist für die Fernbedienung Fx nicht vorzusehen. Der Algorithmus zur Verschlüsselung der Challenge Cx, um die Response Rx zu erhalten, ist vorzugsweise so einfach auszuführen, daß dieser auch in einem Mikrocontroller implementiert werden kann.

## Patentansprüche

1. System zur Kontrolle der Zugangsberechtigung,
- mit einem Basisgerät (BG), das ein Codewort (CWx) empfängt, das eine Antwort (Rx) enthält, die ein Rechner (16) mit einer Sollantwort (Sx) vergleicht, wobei eine Zugangsberechtigung bei Übereinstimmen von Antwort (Rx) und Sollantwort (Sx) erfolgt,
- mit zumindest einer Fernbedienung (F1, ... Fx, ... Fn), die das Codewort (CWx) sendet, wobei in der mindestens einen Fernbedienung (F1, ... Fx, ... Fn) ein im Rahmen eines bereits in der Vergangenheit erfolgreich durchgeführten Anreiz-Antwort-Verfahrens vom Basisgerät (BG) gesendetes Anreizsignal (Cx) gespeichert ist zur Generierung des Codeworts (CWx),
**dadurch gekennzeichnet, dass** das im Basisgerät (BG) hinterlegte Anreizsignal (Cx) dann gelöscht ist, wenn die Anzahl fehlender Übereinstimmungen von Antwort (Rx) und Sollantwort (Sx) einen vorgebbaren Grenzwert (G) übersteigt.

2. System nach Anspruch 1, **dadurch gekennzeichnet, daß** die Sollantwort (Sx) in Abhängigkeit von einer in der Fernbedienung (F1, ... Fx, ... Fn) hinterlegten und im Codewort (CWx) enthaltenen Kennung (K1, ... Kx, ... Kn) gebildet ist.

3. System nach einem der vorhergehenden Ansprüche, **dadurch gekennzeichnet, daß** das Anreizsignal (Cx) in dem Basisgerät (BG) gespeichert ist.

4. System nach einem der vorhergehenden Ansprüche, **dadurch gekennzeichnet, daß** im Codewort (CWx) ein Zählercode (Zx) enthalten ist, der von dem Basisgerät (BG) mit einem Referenzcode (RZx) verglichen ist.

5. System nach Anspruch 4, **dadurch gekennzeichnet, daß** der Zählercode (Zx) bei Betätigung eines Bedienelements (24) der Fernbedienung (F1, ... Fx, ... Fn) verändert ist.

6. System nach einem der vorhergehenden Ansprüche 4 oder 5, **dadurch gekennzeichnet, dass** als Referenzcode (RZx) ein gesendeter Zählercode (Zx) verwendet ist.

7. System nach einem der vorhergehenden Ansprüche 4 bis 6, **dadurch gekennzeichnet, dass** der Zählercode (Zx) verschlüsselt in dem Codewort (CWx) enthalten ist.

8. System nach einem der vorhergehenden Ansprüche, **dadurch gekennzeichnet, daß** die Übertragung des Codeworts (CWx) mit einer höheren Frequenz erfolgt als die Übertragung des Anreizsignals (Cx).

## Claims

1. System for controlling access authorization,
- having a base unit (BG) which receives a code word (CWx) which contains a response (Rx) which a computer (16) compares with a reference response (Sx), an access authorization taking place if the response (Rx) and reference response (Sx) correspond,
- having at least one remote control device (F1,...Fx,...Fn) which transmits the code word (CWx), wherein an alert signal (Cx) which is transmitted by the base unit (BG) within the scope of an alert/response method which has already been carried out successfully in the past is stored in the at least one remote control device (F1,...Fx,...Fn) in order to generate the code word (CWx),
**characterized in that** the alert signal (Cx) which is stored in the base unit (BG) is deleted if the number of failures of the response (Rx) and reference response (Sx) to correspond exceeds a predefinable limiting value (G).

2. System according to Claim 1, **characterized in that** the reference response (Sx) is formed as a function of an identifier (K1,...Kx,...Kn) which is stored in the remote control device (F1,...Fx,...Fn) and contained in the code word (CWx).

3. System according to one of the preceding claims, **characterized in that** the alert signal (Cx) is stored in the base unit (BG).

4. System according to one of the preceding claims, **characterized in that** a countercode (Zx) which is compared with a reference code (RZx) by the base unit (BG) is contained in the code word (CWx).

5. System according to Claim 4, **characterized in that** the countercode (Zx) is changed when a remote controlled element (24) of the remote control device (F1,...Fx,...Fn) is actuated.

6. System according to one of the preceding Claims 4 or 5, **characterized in that** a transmitted countercode (Zx) is used as the reference code (RZx).

7. System according to one of the preceding Claims 4 to 6, **characterized in that** the countercode (Zx) is contained in encrypted form in the code word (CWx).

8. System according to one of the preceding claims, **characterized in that** the code word (CWx) is transmitted at a higher frequency band than the frequency at which the alert signal (Cx) is transmitted.

## Revendications

1. Système de contrôle d'autorisation d'accès, comportant
- un appareil de base (BG) qui reçoit un mot de code (CWx) qui contient une réponse (Rx) que compare un ordinateur (16) avec une réponse de référence (Sx), une autorisation d'accès étant accordée s'il y a concordance entre la réponse (Rx) et la réponse de référence (Sx),
- au moins une télécommande (F1, ... Fx, ... Fn) qui envoie le mot de code (CWx), avec dans au moins la télécommande (F1, ... Fx, ... Fn), un signal d'invite (Cx) envoyé par l'appareil de base (BG) dans le cadre d'un procédé invite-réponse déjà exécuté avec succès auparavant, et stocké afin de permettre la génération du mot de code (CWx),
**caractérisé en ce que**
le signal d'invite (Cx) présent dans l'appareil de base (BG) est effacé lorsque le nombre de défauts de concordance entre la réponse (Rx) et la réponse de référence (Sx) dépasse une valeur limite (G) prédéterminée.

2. Système selon la revendication 1,
**caractérisé en ce que**
la réponse de référence (Sx) est formée en fonction d'un identificateur (K1, ... Kx, ... Kn) présent dans la télécommande (F1, ... Fx, ... Fn) et contenu dans le mot de code (CWx).

3. Système selon l'une quelconque des revendications précédentes,
**caractérisé en ce que**
le signal d'invite (Cx) est stocké dans l'appareil de base (BG).

4. Système selon l'une quelconque des revendications précédentes,
**caractérisé en ce qu'**
un code de compteur (Zx) est contenu dans le mot de code (CWx), ce code de compteur étant comparé par l'appareil de commande (BG) avec un code de référence (RZx).

5. Système selon la revendication 4,
**caractérisé en ce que**
le code de compteur (Zx) est modifié lors de l'actionnement d'un élément de commande (24) de la télécommande (F1, ... Fx, ... Fn).

6. Système selon l'une des revendications précédentes 4 ou 5,
**caractérisé en ce qu'**
un code de compteur (Zx) envoyé est utilisé en tant que code de référence (RZx).

7. Système selon l'une des revendication précédentes 4 à 6,
**caractérisé en ce que**
le code de compteur (Zx) est contenu de façon cryptée dans le mot de code (CWx).

8. Système selon l'une quelconque des revendications précédentes,
**caractérisé en ce que**
la transmission du mot de code (CWx) s'effectue à une fréquence plus élevée que la transmission du signal d'invite (Cx).
